(19) Europäisches Patentamt
European Patent Office
Office européen des brevets

(11) **EP 0 940 571 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.[7]: **F02D 41/14**, F02D 41/20, F02D 41/12, F02D 41/34

(21) Anmeldenummer: **98117686.0**

(22) Anmeldetag: **17.09.1998**

(54) **Verfahren und Vorrichtung zum Steuern der Kraftstoffeinspritzung**

Method and device for controlling the fuel injection

Procédé et dispositif pour contrôler l'injection de carburant

(84) Benannte Vertragsstaaten:
**DE FR GB**

(30) Priorität: **04.03.1998 DE 19809173**

(43) Veröffentlichungstag der Anmeldung:
**08.09.1999 Patentblatt 1999/36**

(73) Patentinhaber: **ROBERT BOSCH GMBH**
**70442 Stuttgart (DE)**

(72) Erfinder:
• **Buck, Rainer**
**71732 Tamm (DE)**

• **Herrmann, Bernd**
**74343 Sachsenheim (DE)**
• **Koelle, Ulrich**
**71701 Schwieberdingen (DE)**
• **Randoll, Helmut**
**71665 Vaihingen (DE)**
• **Franz, Carsten**
**71706 Markgröningen (DE)**

(56) Entgegenhaltungen:
**EP-A- 0 351 078       EP-A- 0 416 270**
**EP-A- 0 725 211       DE-A- 3 929 747**
**US-A- 5 216 882**

1      **EP 0 940 571 B1**      2

## Beschreibung

### Stand der Technik

Die Erfindung betrifft ein Verfahren und eine Vorrichtung zum Steuern der Kraftstoffeinspritzung gemäß den Oberbegriffen der unabhängigen Ansprüche.

Ein Verfahren und eine Vorrichtung zum Steuern der Kraftstoffeinspritzung sind aus der DE-OS 39 29 747 (US 5,070,836) bekannt. Dort wird eine Vorrichtung zum Steuern der Kraftstoffeinspritzung beschrieben, bei dem wenigstens ein Magnetventil die in die Brennkraftmaschine einzuspritzende Kraftstoffmenge festlegt. In bestimmten Betriebszuständen wird die Dauer des Ansteuersignals für das Magnetventil ermittelt, bei dem gerade eine Einspritzung erfolgt.

Aus der EP-A-0 416 270 ist ein Verfahren und eine Einrichtung zur Steuerung einer selbstzündenden Brennkraftmaschine bekannt. Eine Regeleinrichtung gibt ein Mengensignal zur Kraftstoffzumessung an ein Stellwerk ab. Unter bestimmten Bedingungen werden Korrekturmittel aktiviert, die zylinderspezifisch Korrekturwerte zur Zylindergleichstellung bereitstellen und dauerhaft abspeichern. Die Korrekturwerte werden dabei abhängig von wenigstens einer der Größen Abgastemperatur, Lambdawert, Drehzahl oder Drehmoment berechnet.

### Aufgabe der Erfindung

Der Erfindung liegt die Aufgabe zugrunde, bei einem Verfahren und einer Vorrichtung zum Steuern der Kraftstoffeinspritzung der eingangs genannten Art eine möglichst einfache Vorgehensweise und ein möglichst einfaches Verfahren bereitzustellen, mit dem eine möglichst genaue Kraftstoffzumessung erreicht werden kann.

Diese Aufgabe wird durch die in den unabhängigen Ansprüchen gekennzeichneten Merkmale gelöst.

### Vorteile der Erfindung

Die erfindungsgemäßen Vorgehensweise stellt ein einfaches Verfahren und eine einfache Vorrichtung zur genauen Kraftstoffzumessung dar.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. Figur 1 zeigt eine schematische Darstellung einer Einrichtung zur Durchführung des Verfahrens gemäß dem Anspruch 1. In Figur 2 ist der Zusammenhang zwischen der Dauer des Ansteuerimpulses T und der eingespritzten Kraftstoffmenge dargestellt. Ein Flußdiagramm zur Erläuterung des Verfahrens ist in Figur 3 dargestellt.

### Beschreibung des Ausführungsbeispiels

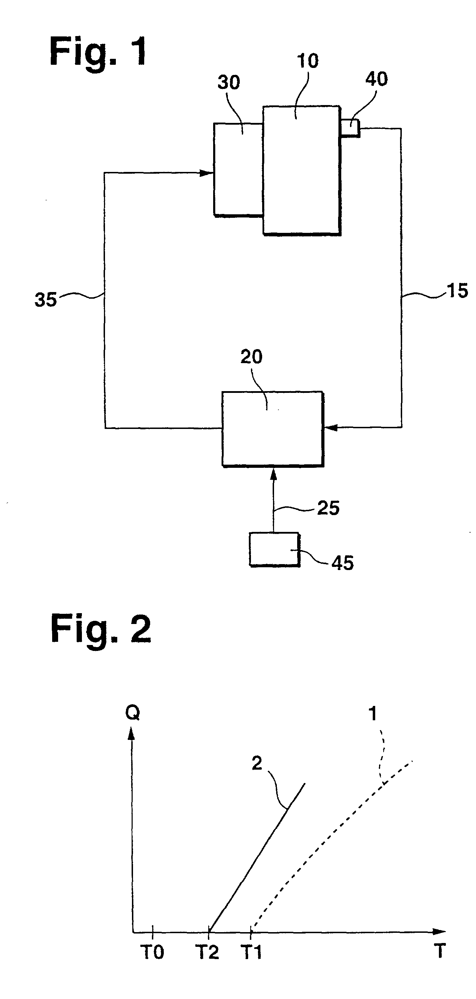

Figur 1 zeigt wesentliche Elemente einer Einrichtung zur Kraftstoffeinspritzung in eine Brennkraftmaschine. Die Brennkraftmaschine 10 erhält von einer Kraftstoffzumeßeinrichtung eine bestimmte Kraftstoffmenge zugemessen. Verschiedene Sensoren 40 erfassen Meßwerte 15, die den Betriebszustand der Brennkraftmaschine 10 charakterisieren und leiten diese zu einem Steuergerät 20. Das Steuergerät 20 berechnet ausgehend von den Meßwerten 15 und weiteren Größen 25, die beispielsweise von einem Drehzahlsensor 45 bereitgestellt werden, Ansteuerimpulse 35, mit denen die Kraftstoffzumeßeinrichtung 30 beaufschlagt wird. Bei den Sensoren 40 handelt es sich unter anderem um Sensoren, die die Abgaszusammensetzung erfassen und ein entsprechendes Signal bereitstellen. Insbesondere liefert der Sensor ein Signal, das die Konzentration der Kohlenwasserstoffe im Abgas charakterisiert.

Bei der Brennkraftmaschine 10 handelt es sich vorzugsweise um eine selbstzündende Brennkraftmaschine.

Das Steuergerät 20 berechnet in bekannter Weise, die in die Brennkraftmaschine 10 einzuspritzende Kraftstoffmenge. Diese Berechnung erfolgt abhängig von verschiedenen Meßwerten 25, wie beispielsweise der Drehzahl, der Motortemperatur, dem tatsächlichen Einspritzbeginn, der Abgaszusammensetzung und evtl. noch weiteren Größen, die den Betriebszustand der Brennkraftmaschine oder Umgebungsbedingungen charakterisieren. Dies sind beispielsweise die Stellung des Fahrpedals sowie der Umgebungsluftdruck oder die Umgebungstemperatur.

Das Steuergerät 20 setzt dann die gewünschte Kraftstoffmenge in Ansteuerimpulse 35 um. Mit diesen Ansteuerimpulsen wird dann das mengenbestimmende Element des Kraftstoffzumeßsystems 30 beaufschlagt. Als mengenbestimmendes Element kann vorzugsweise ein Magnetventil und/oder ein Piezosteller eingesetzt werden. Dieses mengenbestimmende Element ist so angeordnet, daß durch die Öffnungsdauer, bzw. die Schließdauer die einzuspritzende Kraftstoffmenge und durch den Öffnungsund/oder Schließzeitpunkt der Beginn der Kraftstoffeinspritzung festgelegt wird.

Bei magnetventilgesteuerten Verteiler-Einspritzpumpen ist eine Hochdruckkraftstoffpumpe mit einem Magnetventil vorgesehen, die nacheinander alle Zylinder mit Kraftstoff beaufschlagt. Bei Common-Rail-Systemen ist eine Hochdruckkraftstoffpumpe vorgesehen, die den Kraftstoff in einem Vorratsbehälter auf einen vorgegebenen Druck verdichtet. Über Injektoren, die vorzugsweise mittels Magnetventilen oder Piezostellern angesteuert werden, wird der Kraftstoff in dem Vorratsbehälter den einzelnen Zylindern der Brennkraft-

2

maschine zugemessen. Dabei weist jeder Injektor ein mengenbestimmendes Element in Form eines Magnetventils oder eines Piezostellers auf. Solche Systeme, bei denen ein Magnetventil oder ein Piezosteller die Einspritzung steuert werden auch als zeitgesteurte Systeme bezeichnet.

Die erfindungsgemäße Vorgehensweise ist nicht auf diese Anwendungen beschränkt, sie kann bei allen elektrisch und/oder magnetisch gesteuerten Kraftstoffzumeßsystemen verwendet werden. Insbesondere kann sie auch bei sogenannten Pumpedüsesystemen eingesetzt werden.

In Figur 2 ist der Zusammenhang zwischen der Dauer T des Ansteuerimpulses und der eingespritzten Kraftstoffmenge Q für ein erstes Magnetventil 1 und ein zweites Magnetventil 2 dargestellt. Der Zusammenhang ist für das erste Magnetventil mit einer gestrichelten und für das zweite Magnetventil mit einer durchgezogenen Linie aufgetragen.

Das Magnetventil 1 mißt bei einer Ansteuerdauer, die größer als T1 ist, Kraftstoff zu. Bei kleineren Ansteuerdauern erfolgt keine Kraftstoffzumessung. Das Magnetventil 2 dagegen mißt schon ab einer Ansteuerdauer T2 Kraftstoff zu. Werden nun die Magnetventile 1 und 2 mit einem Signal der Dauer T2 beaufschlagt, so erfolgt nur bei dem Magnetventil 2 eine Einspritzung, beim Magnetventil 1 dagegen nicht.

Ziel des im folgenden beschriebenen Verfahren ist es nun, diese Streuungen auszugleichen. Dabei sind im wesentlichen zwei Ursachen für diese Streuungen gegeben. Dies sind zum einen Toleranzen bei der Fertigung der Magnetventile, zum anderen Alterungserscheinungen in der Kraftstoffzumeßeinrichtung. Die in Figur 2 dargestellte Kennlinie streut von Exemplar zu Exemplar und unterliegt desweiteren Änderungen durch Alterung und Verschleiß.

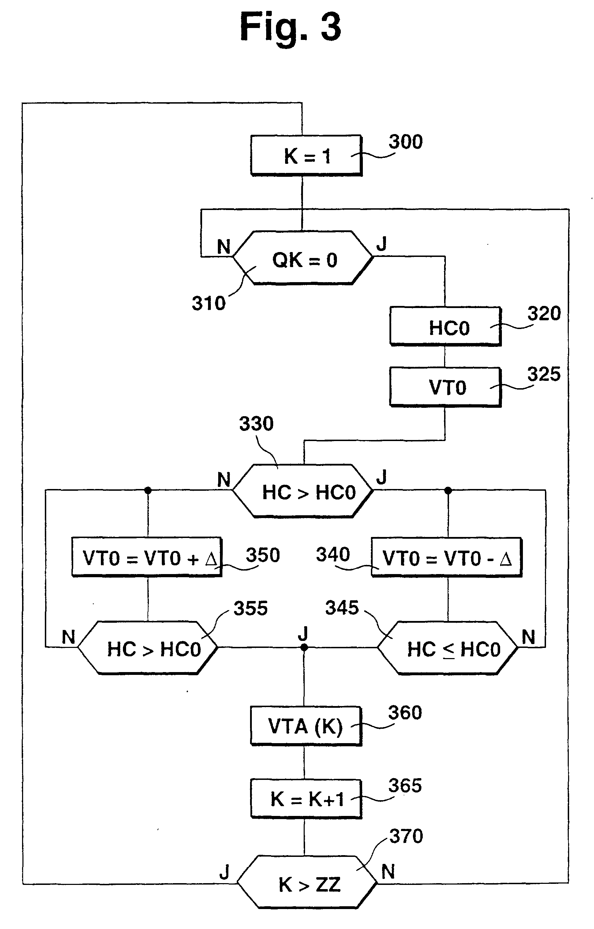

Mit Hilfe des Flußdiagramms der Figur 3 wird im folgenden das Verfahren zum Ausgleich dieser Streuungen beschrieben.

In einem ersten Schritt 300 wird ein Zähler K auf 1 gesetzt. Anschließend überprüft eine Abfrage 310, ob die eingespritzte Kraftstoffmenge QK = 0 ist. Ist dies nicht der Fall, so erfolgt erneut die Abfrage 310. Wird erkannt, daß die eingespritzte Kraftstoffmenge QK = 0 ist, so wird in Schritt 320 der Wert HCO eines Sensors gemessen, der ein Signal abgibt, das die Abgaszusammensetzung kennzeichnet. Besonders vorteilhaft ist es, wenn ein Sensor verwendet wird, der den Gehalt von unverbrannten Kohlenwasserstoffen ermittelt. Ein solcher Sensor wird im folgenden kurz als HC-Sensor bezeichnet. Alternativ oder ergänzend kann auch ein Sensor verwendet werden, der den Gehalt an Sauerstoff im Abgas erfaßt.

Die Abfrage 310 überprüft, ob ein bestimmter Betriebszustand vorliegt, in dem das Verfahren durchgeführt werden kann. Es kann auch vorgesehen sein, daß der Abgleich in mehreren Betriebszuständen durchgeführt wird. Ein solcher Betriebszustand liegt beispielsweise vor, wenn kein Kraftstoff eingespritzt wird, das heißt die eingespritzte Kraftstoffmenge QK = 0 ist.

Alternativ kann auch vorgesehen sein, daß überprüft wird ein Schubbetrieb vorliegt. Schubbetrieb liegt vor, wenn die Drehzahl einen bestimmten Wert überschreitet, wobei gleichzeitig das Fahrerwunschsignal 0 ist.

Als weitere Bedingung wird überprüft, ob die Brennkraftmaschine ihre normale Betriebstemperatur erreicht hat, das heißt es wird geprüft, ob die Temperatur des Kühlwassers und/oder des Schmierstoffes größer als ein Schwellwert ist.

Liegt der bestimmte Betriebszustand vor, so wird, wie im folgenden beschrieben ein Abgleichwert VTA ermittelt. Hierzu wird ein die Abgaszusammensetzung erfassender Sensor verwendet.

In diesem Betriebszustand, wenn keine oder nur eine sehr geringe Kraftstoffmenge eingespritzt wird, ist der Anteil von unverbrannten Kohlenwasserstoffen, das heißt die HC-Emission, sehr gering bzw. nimmt den Wert 0 an. Der in Schritt 320 gemessene Wert wird als Nullemission HCO abgespeichert.

Anschließend in Schritt 325 wird eine Ansteuerdauer VT0 für eine Einspritzung für den k-ten Zylinder vorgegeben. Der Grundwert VT0 für die Ansteuerung wird dabei vorzugsweise als Funktion des bisherigen Abgleichwerts VTA vorgegeben. Besonders vorteilhaft ist es, wenn zur Ermittlung des Grundwertes weitere Größen, wie der Kraftstoffdruck P verwendet werden.

Anschließend in Schritt 330 wird dann die aktuell erfaßte HC-Emission HC gemessen und mit dem abgespeicherten Wert HCO verglichen. Ist der Wert HC größer als abgespeicherte Wert HCO, so wird in Schritt 340 der Wert VT0 um den Wert $\Delta$ verringert. Anschließend wird überprüft, ob der aktuelle Wert HC kleiner oder gleich dem Wert HCO ist. Ist dies nicht der Fall, so erfolgt erneut Schritt 340.

Erkennt die Abfrage 330, daß der Wert HCO nicht größer ist als HCO, so folgt Schritt 350 indem der Wert VT0 um den Wert A erhöht wird. Die sich anschließende Abfrage 355 überprüft, ob nun der Wert HC größer als der Wert HCO ist. Ist dies nicht der Fall, so erfolgt erneut Schritt 350.

Dies bedeutet, ändert sich die HC-Emission nachdem Ansteuerung mit der Zeitdauer VT0 erfolgte nicht, so erfolgt keine Einspritzung. Steigt die HC-Emission an, so wird auf eine Einspritzung erkannt. Wird keine Einspritzung erkannt, wird die Ansteuerdauer VT0 rampenförmig erhöht, bis die Emission an HC ansteigt. Die dann vorliegende Zeit VT0 wird als Agleichwert VTA (K) für den k-ten Zylinder in Schritt 360 abgespeichert.

Wird eine Einspritzung in Schritt 330 erkannt, wird die Ansteuerdauer VT0 in analoger Weise rampenförmig erniedrigt, bis die Emission an Kohlenwasserstoffen auf 0 zurückgeht. In diesem Fall wird ebenfalls der erreichte Wert VT0 in Schritt 360 als Abgleichwert VTA(K) für den k-ten Zylinder abgespeichert. Anschließend wird in Schritt 365 der Zähler K um 1 erhöht. Die anschließende Abfrage 370 überprüft, ob der Wert K größer als die Zahl ZZ ist, die der Anzahl der Zylinder der Brennkraftmaschine entspricht. Ist dies nicht der Fall, so erfolgt die Überprüfung für den nächsten Zylinder. Ist dies der Fall, so endet das Programm.

Dies bedeutet ausgehend von einem Grundwert wird die Ansteuerdauer erhöht und/oder verringert, bis sich eine Änderung beim Ausgangssignal des Sensors ergibt. Ausgehend von der erreichten Ansteuerdauer VTO wird der neue Abgleichwert VTA vorgegeben.

Besonders vorteilhaft ist es, daß bei dem Verfahren jeweils nur ein Stellelement angesteuert wird, um einen zylinderindividuellen Wert für den Abgleichwert zu ermitteln. Wird der vorbestimmte Betriebszustand verlassen, bevor das Verfahren abgearbeitet wurde, wird dieses abgebrochen und der letztmals ermittelt Ansteuerdauer VTO als Abgleichwert VTA beibehalten. Wird der bestimmte Betriebszustand erneut erreicht, wird das Verfahren fortgesetzt und der Abgleichwert des nächsten Zylinders entsprechend ermittelt.

Die mit Hilfe des Verfahrens ermittelten Abgleichwerte VTA(k) des k-ten Zylinders, wird in besonders vorteilhafter Weise in einem Kennfeld, vorzugsweise abhängig von der Last, der eingespritzten Kraftstoffmenge und/oder der Drehzahl der Brennkraftmaschine gespeichert. Diese Werte stehen dann bei jeder Einspritzung zur Verfügung. Die Abgleichwerte VTA werden zur Korrektur der Ansteuerdauer des Magnetventils oder des Piezostellers verwendet. Die Ansteuerdauer T für eine Einspritzung ergibt sich dann gemäß der Beziehung:

$$T = VTA(k) + TE$$

Alternativ zur Ansteuerdauer kann auch ein anderes Signal, das die Ansteuerdauer bestimmt korrigiert werden.

Bei dem Wert TE handelt es sich um die abhängig von Betriebszuständen vorgegebene Ansteuerdauer zur Erreichung einer bestimmten einzuspritzenden Kraftstoffmenge.

Das Verfahren wird vorzugsweise bei einem späten Spritzbeginn durchgeführt, bei dem die eingespritzte Kraftstoffmenge nicht mehr völlig oder gar nicht verbrennt. In diesem Fall ist der Anstieg der HC-Emission besonders ausgeprägt. Vorzugsweise erfolgt die Einspritzung 120° Kurbelwelle nach dem oberen Totpunkt.

In diesem Fall besteht die Möglichkeit ausgehend von der gemessenen Kohlenwasserstoffkonzentration auf die geförderte Einspritzmenge zu schließen. Es gilt dabei der Zusammenhang:

$$ME = K * ZZ * ML * HC$$

Wobei K eine Konstante, ME die eingespritzte Kraftstoffmasse in mg pro Hub, ZZ die Anzahl der Zylinder der Brennkraftmaschine, ML die gemessene Luftmasse im Zylinder in mg pro Hub und HC die gemessene Konzentration unverbrannter Kohlenwasserstoffe im Abgas darstellt. Diese Gleichung gilt ohne Verluste durch Verbrennung, Ölverdünnung u.ä.. Diese Einflüsse können durch die Konstante K berücksichtigt werden.

Häufig wird bei zeitgesteuerten Kraftstoffzumeßsystemen eine geringe Kraftstoffmenge vor der eigentlichen Einspritzung zugemessen. Dabei werden sehr kleine Kraftstoffmengen zugemessen, bei denen sich Toleranzen und Fehler sehr stark auswirken. Besonders vorteilhaft ist es daher, wenn die Ansteuerdauer bei der Voreinspritzung mit den Abgleichwerten korrigiert werden.

Mit der erfindungsgemäßen Vorgehensweise können Toleranzen der Einspritzmenge wesentlich verkleinert werden. Mit der erfindungsgemäßen Vorgehensweise kann die richtige Einstellung berücksichtigt und damit auch Exemplarsteuerungen und auch Alterung und Verschleiß berücksichtigt werden.

## Patentansprüche

1. Verfahren zum Steuern der Kraftstoffeinspritzung, wobei ein mengenbestimmtes Element, die in die Brennkraftmaschine einzuspritzende Kraftstoffmenge festlegt, dass in wenigstens einem bestimmten Betriebzustand wenigstens ein Abgleichwert zur Korrektur eines die Ansteuerdauer des mengenbestimmten Elements bestimmenden Signals ermittelt wird, dass zur Ermittlung des Abgleichwerts ein Signal eines die Abgaszusammensetzung erfassenden Sensors verwendet wird, **dadurch gekennzeichnet, dass** im Schubbetrieb ausgehend von einem Grundwert für die Ansteuerdauer diese so lange erhöht oder verringert wird, bis sich eine Änderung im Ausgangssignal des Sensors ergibt.

2. Verfahren nach einem der vorhergehenden Ansprüche, **dadurch gekennzeichnet, daß** der Sensor ein Signal liefert, das die Konzentration von Kohlenwasserstoffen im Abgas charakterisiert.

3. Verfahren nach einem der vorhergehenden Ansprüche, **dadurch gekennzeichnet, daß** der Grundwert abhängig von wenigstens dem bisherigen Abgleichwert vorgebbar ist.

4. Verfahren nach einem der vorhergehenden Ansprüche, **dadurch gekennzeichnet, daß** Abgleichwert zur Korrektur der Ansteuerdauer bei einer Voreinspritzung verwendbar ist.

5. Vorrichtung zum Steuern der Kraftstoffeinspritzung, mit einem mengenbestimmenden Element, das die in die Brennkraftmaschine einzuspritzende Kraftstoffmenge festlegt, mit Abgleichmitteln, die in wenigstens einem bestimmten Betriebzustand wenigstens ein Abgleichwert zur Korrektur eines die Ansteuerdauer des mengenbestimmten Elements bestimmenden Signals ermitteln, dass zur Ermittlung des Abgleichwerts ein Signal eines die Abgaszusammensetzung erfassenden Sensors verwendet wird, **dadurch gekennzeichnet, dass** die Abgleichmittel im Schubbetrieb ausgehend von einem Grundwert für die Ansteuerdauer diese so lange erhöhen oder verringern, bis sich eine Änderung im Ausgangssignal des Sensors ergibt.

6. Vorrichtung nach Anspruch 5, **dadurch gekennzeichnet, daß** es sich um ein Common-Rail-System handelt.

7. Vorrichtung nach Anspruch 5 oder 6, **dadurch gekennzeichnet, daß** das mengenbestimmende Element als Magnetventil oder als Piezosteller ausgebildet ist.

## Claims

1. Method for controlling the injection of fuel, a quantity-determining element defining the quantity of fuel which is to be injected into the internal combustion engine by the fact that, in at least one defined operating state, at least one adjustment value for correcting a signal determining the period of activation of the quantity-determining element is determined and that, in order to determine the adjustment value, use is made of a signal from a sensor detecting the composition of the exhaust gas, **characterized in that**, in the overrun mode, the period of activation is increased or reduced, from a basic value thereof, until a change in the output signal from the sensor arises.

2. Method according to one of the preceding claims, **characterized in that** the sensor supplies a signal which characterizes the concentration of hydrocarbons in the exhaust gas.

3. Method according to one of the preceding claims, **characterized in that** the basic value can be specified as a function of at least the previous adjustment value.

4. Method according to one of the preceding claims, **characterized in that** the adjustment value for correcting the period of activation can be used in a pre-injection.

5. Device for controlling the injection of fuel, having a quantity-determining element which defines the quantity of fuel which is to be injected into the internal combustion engine, having adjustment means which, in at least one defined operating state, determine at least one adjustment value for correcting a signal determining the period of activation of the quantity-determining element, and, in order to determine the adjustment value, use is made of a signal from a sensor detecting the composition of the exhaust gas, **characterized in that**, in the overrun mode, the adjustment means increase or reduce the period of activation, starting from a basic value for the latter, until a change in the output signal from the sensor arises.

6. Device according to Claim 5, **characterized in that** it is a common rail system.

7. Device according to Claim 5 or 6, **characterized in that** the quantity-determining element is designed as a solenoid valve or as a piezo-adjuster.

## Revendications

1. Procédé pour contrôler l'injection de carburant, selon lequel la quantité de carburant à injecter dans le moteur à combustion interne est fixée par un élément déterminant la quantité, et au moins dans un certain état de fonctionnement, pour corriger un signal fixant la durée de commande de l'élément déterminant la quantité, on établit une valeur de compensation en utilisant un signal émis par un capteur saisissant la composition des gaz d'échappement, **caractérisé en ce que**
quand le moteur agit en propulsion, en partant d'une valeur de base pour la durée de commande, cette valeur est augmentée ou diminuée jusqu'à ce qu'apparaisse une modification du signal de sortie du capteur.

2. Procédé selon la revendication 1, **caractérisé en ce que**
le capteur délivre un signal qui caractérise la concentration des hydrocarbures dans les gaz d'échappement.

3. Procédé selon la revendication 1 ou 2, **caractérisé en ce que**
la valeur de base est prédéfinie en fonction d'au moins la valeur de compensation existant jusqu'alors.

4. Procédé selon l'une des revendications précédentes, **caractérisé en ce que**
la valeur de compensation peut être utilisée pour corriger la durée de commande lors d'une préinjection.

**5.** Dispositif pour contrôler l'injection de carburant, comprenant un élément déterminant la quantité de carburant à injecter dans le moteur à combustion interne, des moyens de compensation qui, dans au moins un certain état de fonctionnement, établissent une valeur de compensation pour corriger le signal fixant la durée de commande de l'élément déterminant la quantité, en utilisant un signal émis par un détecteur saisissant la composition des gaz d'échappement,
**caractérisé en ce que**
quand le moteur agit en propulsion, les moyens de compensation, en partant d'une valeur de base pour la durée de commande, augmentent ou diminuent celle-ci jusqu'à ce qu'apparaisse une modification du signal de sortie du capteur.

**6.** Dispositif selon la revendication 5,
**caractérisé en ce qu'**
il s'agit d'un système à rampe commune (common-rail).

**7.** Dispositif selon la revendication 5 ou 6,
**caractérisé en ce que**
l'élément déterminant la quantité de carburant injecté est une électrovanne ou un organe de réglage piézo-électrique.

# Fig. 1

# Fig. 2

# Fig. 3